(19) Europäisches Patentamt
European Patent Office
Office européen des brevets

(11) EP 1 266 683 A1

# (12) EUROPEAN PATENT APPLICATION

(43) Date of publication:
**18.12.2002 Bulletin 2002/51**

(51) Int Cl.[7]: **B01D 65/08**, B01D 65/04, C09K 17/30

(21) Application number: **02012789.0**

(22) Date of filing: **10.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.06.2001 JP 2001176840**

(71) Applicant: **NISSHINBO INDUSTRIES, INC.**
**Chuo-ku, Tokyo (JP)**

(72) Inventors:
- **Sato, Takaya**
  **Midori-ku, Chiba-shi, Chiba (JP)**
- **Uehara, Tsutomu**
  **Midori-ku, Chiba-shi, Chiba (JP)**
- **Kotani, Mitsugu**
  **Midori-ku, Chiba-shi, Chiba (JP)**

(74) Representative: **Leifert & Steffan**
**Patentanwälte,**
**Burgplatz 21-22**
**40213 Düsseldorf (DE)**

## (54) Gel particle for washing separation membrane modules, manufacturing method thereof and washing method using the same

(57) A washing method for a separation membrane module which comprises adding a gel particle equivalent to 3 to 40 % of the internal capacity of a membrane module into a liquid being treated and suspending it therein, removing and washing built-up materials on the membrane through contacting the gel particle to the membrane and the internal surface of the module, thereby resulting in preventing the membrane from being obstructed and increasing the permeation pressure thereof. The gel particle comprises an organic polymeric compound , which is gelled by absorbing water, with a specific gravity in water from 0.9 to 1.25, a volume swelling ratio in water from 150 % to 4000% and a compressive yield stress in water from 2.0 MPa to 10.0 MPa thereof.

As the gel particle, a thermoplastic polyethylene glycol gel, a thermoplastic polyurethane gel and the like are illustrated. The gel particle is manufactured by a melt extrusion molding method.

*Fig. 1*

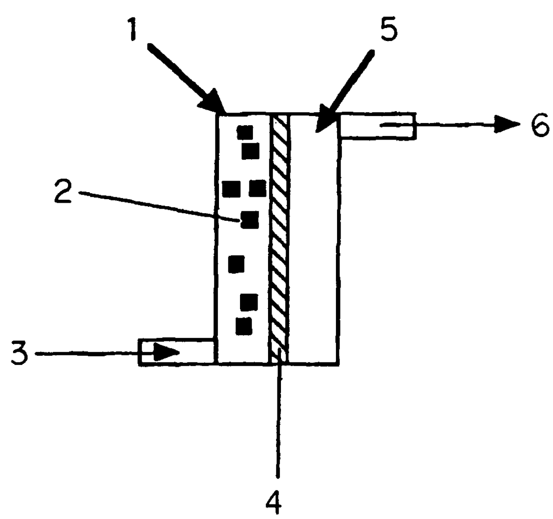


EP 1 266 683 A1

## Description

BACKGROUND OF THE INVENTION

1. Field of the Invention

The present invention relates to a washing method for dirty membrane modules contaminated in the processes, which use a membrane module, of seawater desalination, brackish water demineralization, purified water production, solution condensation, effluent condensation, colloidal separation, salt manufacture, salt decomposition, soda manufacture and the like, in addition, in the process of membrane filtration of water being treated such as river water, well water, industrial water, industrial effluent and the like. More particularly, it relates to a washing method, which is contrived so as to decrease frequency of washing, for membrane modules, a gel particle for washing a separation membrane module and a manufacturing method thereof.

2. Description of Related Prior Art

A membrane module means an element obtained by modularizing a membrane such as a reverse osmosis membrane, an ultra-filtration membrane, an ion-exchange membrane, a dialysis membrane, a permeation vaporization membrane and the like so as to be installed into a membrane filtration apparatus. It has been popularly used for seawater desalination, brackish water demineralization, purified water production, solution condensation, effluent condensation, colloidal separation, salt manufacture, salt decomposition, soda manufacture, and filtration-clarification process of river water, well water, industrial water, industrial effluent and the like.

However, in accordance with elapsing of operation hours, a membrane surface of such a module is clogged due to building up of scale or contaminant such as organic compounds, various microorganism or crystal particularly thereon. Therefore, the permission pressure is gradually increased, and resulting in decreasing hourly flow rate of permeate as treated water therefrom.

So as to wash a membrane module having a contaminated membrane surface, a chemical washing method using a chemical washing liquid has been employed; further various methods have been proposed and employed.

For example, a method circulating a washing liquid to the primary-side of a membrane module is disclosed in Japan Laid-Open Patent Application H1-307407/1989. Further a washing method (a reverse washing method) permeating and circulating a washing liquid from the secondary-side to the primary-side of a membrane module is disclosed in Japan Laid-Open Patent Application H7-60072/1995.

SUMMRY OF THE INVENTION

1. The Subjects to be solved by the present invention

However, in such chemical washing methods, the filtration should be suspended during the washing, thereby resulting in big time waste.

Further, although it was proposed that a method of controlling generation of microorganism or scale by adding sodium hypochloride (NaOCl) into raw water being treated during a filtration step of effluent water (Japan Laid-Open Patent Application H7-275671/1995), the permeate containing even a minute amount of sodium hypochloride is to be released into the environment.

In addition, there has been a problem in membrane permeation treatment using a membrane module washed by a conventional chemical washing method; namely it has been required to wash the membrane module again within a short period because the permission pressure increased sharply in accordance with passage of the operation time for the membrane permeation. Therefore, economical improvement of membrane permeation treatment using a membrane module has been difficult due to becoming shorter of a period between washings, namely shortened operation time for the membrane permeation.

Further, a method prevents the increase of the permission pressure by introducing a gel material as a washing material into a membrane filtration system (Japan Laid-Open Patent Application H9-308883/1997). However, the gel material suitable for a washing material was limited, therefore a gel material having reasonable softness not damaging a membrane surface as well as reasonable hardness enabling a membrane surface to wash adequately has not been obtained.

Therefore, the subjects of the present invention are to provide a highly effective washing method for a membrane module, a gel particle suitable for the method and a manufacturing method thereof.

2. The method to solve the Subjects

The present inventors accumulated intensive research and development so as to solve the aforementioned subjects and found that, differing from conventional chemical washing methods, the gel particles being gelled by absorbing water appropriately are coexisted with raw water being treated and suspended therein so that it is possible to physically remove scale, microorganism, dirty material, crystals and the like built-up on a membrane through contacting the gel particles with the internal surface of a separation membrane module; subsequently possible to prevent the permission pressure of a membrane.

The present inventions are as follows;

(1) A gel particle for washing a separation membrane module, which comprises an organic polymeric compound having a specific gravity in water from 0.9 to 1.25, a volume swelling ratio in water from 150 % to 4000 % and a compressive yield stress in water from 2.0 MPa to 10.0 MPa thereof.

(2) The gel particle for washing a separation membrane module defined in above (1), wherein the organic polymeric compound is a polyurethane water-absorbing gel obtained from a reaction of a long-chain polyol compound and a short-chain polyol compound with an isocyanate compound.

(3) A manufacturing method of a gel particle for washing a separation membrane module, which comprises plasticizing a thermoplastic organic polymeric compound, which is gelled by absorbing water, obtained from a reaction of a long-chain polyol compound and a short-chain polyol compound with an isocyanate compound by heating to the melting temperature thereof, hence extruding it into a strand shape followed by cutting it to pellets.

(4) A washing method for a separation membrane module, which comprises adding the gel particle defined herein equivalent to 3 to 40 % of the internal capacity of a membrane module into a liquid being treated and suspending it therein, removing and washing built-up materials on the membrane through contacting the gel particle to the membrane and the internal surface of the module, thereby resulting in preventing the membrane from being obstructed and increasing the permeation pressure thereof; wherein the gel particle comprises an organic polymeric compound with a specific gravity in water from 0.9 to 1.25, a volume swelling ratio in water from 150 % to 4000% and a compressive yield stress in water from 2.0 MPa to 10.0 MPa thereof.

(5) The washing method defined in above (4), wherein a reverse osmosis membrane, an ultra-filtration membrane, an ion-exchange membrane, a dialysis membrane or a permeation vaporization membrane is employed to a membrane module.

BRIEF DESCRIPTION OF THE DRAWINGS

Fig. 1 shows an illustrative longitudinal section of a membrane module of the present invention,
Fig. 2 shows an illustrative longitudinal section of a membrane module of the present invention,
Fig. 3 is a graph showing the results of Examples of the present invention, and
Fig. 4 is an illustration for the measuring method of the specific gravity in water.

Wherein the numerical symbols mean:

1. primary-side (raw water being treated),
2. gel particle,
3. raw water being treated,
4. membrane,
5. secondary-side(permeate),
6. permeate.

DETAILED DESCRIPTION OF THE PREFFERD EMBODIMENTS

A gel particle being used for a washing method of the present invention comprising an organic polymeric compound; as it is explained by using the membrane module shown in Fig. 1, an adding amount of a gel particle 2 for washing into the primary-side depends on the property of the raw water 3. The raw water 3 supplied to the primary-side 1 is permeated through the membrane 4, reaching to the second-side 5 and then discharged as permeate. If the raw water tends easily to foul the membrane, an adding amount of the gel particle should be increased. In the case of the raw water less fouling it, a decreased amount thereof is reasonable.

The amount of a gel particle to be added into the primary-side should be equivalent to 3 to 40 % of the module

capacity. If it is less than 3 %, washing efficiency thereof is reduced due to low in contact numbers of the gel particles with the membrane surface If it is more than 40 %, the gel particle volume in the primary-side is too large, therefore the amount of the raw water is decreased, consequently resulting in reduced efficiency thereof. In addition, the movement thereof is slowed down due to collide of the gel particles each other.

Herein, the module capacity of the present invention means the internal capacity of the section (the primary-side) of the module where the gel particle is added in.

So as to make uniform movement thereof in the primary-side (a reaction vessel), the specific gravity of the gel particle in water should be from 0.9 to 1.25. It is possible to control the specific gravity by incorporating a higher specific gravity powder such as barium sulfate and the like therein during synthesis of a thermoplastic gel particle.

Herein, the specific gravity in water means the specific gravity of the gel particle swelled completely in water. The measurement method thereof is as follows (refer Fig. 4);

① Arrange a measuring flask with an airtight stopper, dry it at 100°C and then measure the weight of the flask with the stopper at 25°C ( A gm),
② Fill it with purified water up to the marked line thereof and put the stopper in it, then measure the weight thereof at 25°C (B gm),
③ Put a reasonable amount of a gel particle (pellet type, chip type), which is swelled completely in water, into the flask and fill it with the water according to the same method as above ② , then measure the weight thereof at 25°C ( C gm),
④ Take out and wipe the water off all the gel particles (pellets or chips) and measure the weight, at 25°C, of the well wiped gel particles (D gm), and
⑤ Calculate the specific gravity in water in accordance with the following equation;

The specific gravity in water

$$= D\ (gm) / [(B\ (gm) - A\ (gm)) - (C\ (gm) - D\ (gm))]$$

In the case of wastewater treatment by using a membrane permeation apparatus particularly, for example, BOD, COD, nitrogen compounds, activated sludge (microorganism), activated sludge floc, microzoon, or the like might be contained in the raw water in the primary-side of Fig. 1; therefore, the treatment of contaminant and the permeation are possible to be carried out in parallel while injecting diffusing air into the module. In this case, the gel particle added in the primary-side acts not only as the module-washing agent but also as a carrier for microorganism.

Although there is no restriction on size or shape of the gel particle being used, a dice shape, a columnar shape and a spherical shape are preferable illustrations so as to provide a larger external surface area thereof. For instance, a particle such as a dice shape with a side of 2 to 8 mm, a columnar shape of 2 to 8 in diameter and 2 to 8 in length, a spherical shape of 2 to 8 in diameter and the like is more preferable.

In the case of a flat membrane stack type module shown in Fig. 2, it is preferable to control a size of a gel particle so as to get into a space between adjacent membrane smoothly since the space is generally from 5 to 20 mm.

Although there is no restriction on membrane materials, following materials are illustrated.
As a dialysis membrane, a polyvinyl alcohol type membrane, a cellulose type membrane, a polyacrylonitrile type membrane, a polyacrylonitrile methacrylic sulfonic acid type membrane, a polyether- carbonate type membrane, an ethylene vinyl alcohol copolymer type membrane, a polymethacrylic acid type membrane and the like have been utilized.

As an ultrafiltration membrane, a polysulfone type membrane, a polyphenyl sulfone type membrane, a polyether sulfone type membrane, a polyimide type membrane and the like have been utilized.

As a reverse osmosis membrane, a polyamide type membrane, a polyethylene imine type membrane, a polyether type membrane and the like have been utilized.

As an ion-exchange membrane, a styrenedivinylbenzene type membrane, various types of polymer cation-exchange membranes, various types of polymer anion-exchange membranes, a perfluorocarbon membrane and the like have been utilized.

In addition, the washing method of the present invention and the gel particle for the washing can be applied to separation membrane modules using a polyvinylidene fluoride membrane, a butadiene-acrylonitrile copolymer type membrane, a polydimethyl siloxane membrane, a modified polyvinylidene fluoride membrane, a modified polytetrafluoroethylene membrane and the like.

It is particularly preferable to apply the washing method of the present invention to separation membranes comprising an organic polymer. Such separation membranes are a flat stack type or a bundled hollow fiber type; however, they are not good in abrasion resistance or impact-strength.

Therefore, the addition of a sand particle, hard-resin powder or a hard-resin pellet into the module to remove

physically scale or microorganism built-up on a separation membrane module and wash it is highly possible to damage the membrane, therefore durability of the membrane is lowered. On the other hand, if too soft material is added, it is distracted due to contact with the membrane; therefore washing result is not expected.

The present inventors found that a gel particle comprising an organic polymeric compound which is gelled by absorbing water is suitable as a washing particle being used for the washing method of the present invention. In particular, a gel particle having a specific gravity in water in the range from 0.9 to 1.25, a volume swelling ratio in water, as defined by the following equation (2), from 150% to 4000% and a compressive yield stress in water in terms of completely swelled in water, as defined by the following equation (3), from 2.0 to 10.0 MPa is suitable.

$$\text{The volume-swelling ratio (\%)} = \text{the volume in terms of completely swelled in water (cm}^3\text{)} \times 100 \,/\, \text{the volume in terms of absolutely dried (cm}^3\text{)} \qquad \text{equation (2);}$$

wherein, "the absolutely dried" means the terminating point of the weight decreasing of the gel particle while drying it at 100°C. "The completely swelled in water" means the terminating point of the volume variation thereof while soaking the gel particle in purified water at 25°C.

$$\text{The compressive yield stress } \sigma \text{ (MPa)} = F \text{ (N)} \,/\, A \text{ (mm}^2\text{)} \qquad \text{equation (3);}$$

wherein, "F" means the compressed lard (N) when the particle is destroyed by pressure and "A" means the projected cross-sectional areas (mm$^2$) of the particle before conducting the compression test thereof.

If the volume-swelling ratio in water is less than 150%, it is not the water-absorbing gel because the water absorption is too low, attraction of microorganism thereof is poor and the water absorption ratio is too low. If it is more than 4000%, it is not possible to put practical use due to too low mechanical strength thereof.

If the compressive yield stress is less than 2.0 MPa, the gel particle becomes smaller due to crash or wears during flowage thereof, therefore desired washing result is not achieved. If it is more than 10.0 MPa, the separation membrane is possibly damaged thereby.

A chemical structure of a resin as a material for the gel particle of the present invention is not restrictive provided that it has the aforementioned properties. The following is illustrative of the gel particle being used and a manufacturing method thereof.

A thermoplastic polyethylene glycol, thermoplastic polyurethane or the like is illustrative of a thermoplastic resin as a material of the gel particle of the present invention. The thermoplastic polyurethane is a polyurethane copolymer comprising a soft-segment and a hard-segment obtained by head to tail bonding through a urethane-bond. It is synthesized by the reaction of a long-chain diol compound, a diisocyanate compound and a short-chain diol compound.

The soft-segment is obtained by the reaction of a long-chain diol compound with an isocyanate compound and shown as the equation (4).

$$-(-O-X-O-\overset{\overset{\displaystyle O}{\|}}{C}-NH-Y-NH-\overset{\overset{\displaystyle O}{\|}}{C}-)- \quad \cdots \text{ equation (4)}$$

The hard-segment is obtained by reacting a short-chain diol compound with an isocyanate compound and shown as the equation (5)

$$-(-O-Z-O-\overset{\overset{\displaystyle O}{\|}}{C}-NH-Y-NH-\overset{\overset{\displaystyle O}{\|}}{C}-)- \quad \cdots \text{equation (5)}$$

In the above equations, "X" means the group (excluding the terminal hydroxyl group therefrom) deriving from a reaction of isocyanate groups with the terminal hydroxyl groups of a long-chain glycol compound of number average molecular weight (MN) in the range from 400 to 10000.

As the long-chain diol compound being used for the present invention, it is preferable that a water-soluble polyether type diol of ethylene oxide-propylene oxide copolymer or a water-soluble polyethylene glycol; these have two terminal hydroxyl groups in each molecule thereof.

As the former diol, it is preferable, particularly, to contain ethylene oxide not less than 70 weight %; further more not less than 85 weight %. If it is less than 70 weight %, the volume-swelling ratio in water happens to be lowered.

In the above equations, "Y" means the group (excluding the isocyanate group therefrom) deriving from a reaction of hydroxyl groups with diisocyanate compound of number average molecular weight in the range from 100 to 1000.

As the isocyanate compound being used for the present invention, tolylene diisocyanate, xylylene diisocyanate, naphthylene diisocyanate, diphenyl methane diisocyanate, biphenylene diisocyanate, diphenylether diisocyanate, tolidine diisocyanate, hexamethylene diisocyanate, isophorone diisocyanate, and the like are illustrated.

In the above equations, "Z" means the group (excluding the terminal hydroxyl group therefrom) deriving from a reaction of isocyanate groups with the terminal hydroxyl groups of a short-chain diol compound of number average molecular weight in the range from 30 to 400.

As the short-chain diol compound being used for the present invention, ethylene glycol, 1,2-propylene glycol, 1,3-propylene glycol, 1,3-butane diol, 2,3-butane diol, 1,4-butane diol, 1,5-pentane diol, 1,6-hexane diol, 2,2-dimethyl-1,3-propane diol, diethylene glycol, dipropylene glycol, 1,4-cyclohexane dimethanol, 1,4-bis-(β-hydroxy ethxy) benzene, p-xylylene diol, phenyl diethanolamine, methyl-diethanolamine, 3,9-bis-(2-hydroxy-1,1-dimethylethyl)-2,4,8,10-tertraoxaspiro[5,5]-undecane and the like are illustrated.

The thermoplastic resin of the present invention is plasticized and shows flowability due to heating up to the melting temperature thereof. It is possible to produce pellets thereof by cutting continuously a strand being extruded from a heated extruder. All most of carrier particles for bio-reactors are generally made of thermosetting polymers. In this case, it is hard enough since such polymers should be cut so as to obtain a desired shape thereof. Further, it should be crushed to make a chip shape thereof; thereby it is difficult to obtain uniform shapes thereof. There is no good since irregularity in shape thereof results in clogging or outflow on separation of the carriers from the resultant liquid by filtration.

The gel particle comprising a thermoplastic organic polymeric compound as that of the present invention is very useful because it is not only molded into a desired shape by plasticizing it by heat but also possible easily to produce a uniform particle in shape or size.

[Examples]

The present invention is explained in detail by the following examples.

Example 1 (manufacture of a thermoplastic polyurethane gel particles)

68.2 parts by weight of polyethylene glycol (MN: 2000) was put in a glass vessel and stirred slowly at 100°C under nitrogen atmosphere while adding 25.6 parts by weight of diphenyl methane diisocyanate therein, hence further stirred for 30 minutes. Subsequently, 6.2 parts by weight of 1,4-butane diol was added into the reactant followed by a 10 minutes stirring and then the reactant of glutinous rice jelly-like was taken out from the vessel followed by post-cure at 80°C thereof.

The post-cured reactant was molded into a sheet under the pressure of 40 $kg/cm^2$ at 120°C followed by shredding finely thereof, then a strand of 3mm in diameter was molded at 130°C (melting temperature thereof) by using a Labo Plastmill extruder manufactured by Toyo Seiki Seisaku-sho, LTD. The strand was cut to the columnar shape of 3mm in length. A thermoplastic gel particle was obtained by swelling it in water. The specific gravity in water thereof was 1.05, the volume-swelling ratio in water is 230% and the compressive yield stress in water was from 8.0 to 9.0 MPa.

Example 2 (manufacture of a thermoplastic polyurethane gel particle)

88.7 parts by weight of polyethylene glycol (MN 6000) was put in a glass vessel and stirred slowly at 100°C under nitrogen atmosphere while adding 9.3 parts by weight of diphenyl methane diisocyanate therein, hence further stirred for 30 minutes. Subsequently, 2.0 parts by weight of 1,4-butane diol was added into the reactant followed by a 10 minutes stirring and the reactant of glutinous rice jelly was taken out from the container followed by post-cure at 80°C thereof.

The post-cured reactant was molded to a sheet of 1mm in thickness by pressure of 40 kg/cm$^2$ at 120°C followed by shredding finely thereof, then a strand of 3mm in diameter was molded at 130°C (melting temperature thereof) by using a Labo Plastmill extruder manufactured by Toyo Seiki Seisaku-sho, LTD. The strand was cut to the columnar shape of 3mm in length. A thermoplastic gel particle was obtained by swelling it in water. The specific gravity in water thereof was 1.02, the volume-swelling ratio in water is 1100% and the compressive yield stress in water was from 6.5 to 7.5 MPa.

Comparative Example 1 (manufacture of a polyvinyl alcohol gel particle)

In accordance with the method described in Example 2 of Japan Laid-Open Patent Application H6-207071/1994, polyvinyl alcohol gel particle with a white opaque spherical shape in the range of 3 to 3.5 mm particle size were obtained. The specific gravity in water thereof was 1.01 and the compressive yield stress in water was less than 0.3 MPa.

Comparative Example 2 (manufacture of a polyethylene glycol dimethacrylate gel particle)

In accordance with the method described in Example 1 of Japan Laid-Open Patent Application H3-254892/1992, a polyethylene glycol dimethacrylate gel particle was obtained. The compressive yield stress in water thereof was less than 0.3 MPa.

Examples 3 to 6 and Comparative Examples 3 to 6 (washing a separation membrane module)

The membrane permeation test using a raw water consisting of domestic effluent, which had been treated aerobically as primary treatment, was carried out. The raw water contained organic contaminant of BOD (Biochemical Oxygen Demand) = 20 mg/l and suspended solid = 50 mg/l, and the pH thereof was 6.0 to 8.0. An UF membrane of a flat membrane type (total membrane surface area thereof = 20 m$^2$) was applied to the permeation of the raw water. The volume of raw water at the starting time of the operation was 5m$^3$/day and then the volume of the permeate was measured in the following cases and the results are shown in Fig. 3;

1) Nothing was added into the membrane module (Comparative Example 3),
2) Sodium hypochlorite equivalent to 10 ppm of the raw water was added into the membrane module (Comparative Example 4),
3) The gel particle (a columnar shape of 4 mm in diameter and 4 mm in length) of Example 1 equivalent to 10% of the module capacity was added into the membrane module (Example 3).
4) The gel particle (a columnar shape of 4 mm in diameter and 4 mm in length) of Example 1 equivalent to 30% of the module capacity was added into the membrane module (Example 4).
5) The gel particle (a columnar shape of 4 mm in diameter and 4 mm in length) of Example 2 equivalent to 10% of the module capacity was added into the membrane module (Example 5).
6) The gel particle (a columnar shape of diameter 4 mm and length 4 mm) of Example 2 equivalent to 30% of the module capacity was added into the membrane module (Example 6)
7) The gel particle (a spherical shape of particle size from 3 to 3.5 mm) of Comparative Example 1 equivalent to 10% of the module volume was added into the membrane module (Comparative Example 5).
8) The gel particle (a spherical shape of particle size from 3 to 3.5 mm) of Comparative Example 2 equivalent to 30% of the module volume was added into the membrane module (Example 8).

Addition of the gel particle of the present invention is able to maintain the high permeate volume for a long period, thereby shows excellent washing results.

## Claims

1. A gel particle for washing a separation membrane module, which comprises an organic polymeric compound having a specific gravity in water from 0.9 to 1.25, a volume swelling ratio in water from 150 % to 4000 % and a compressive yield stress in water from 2.0 MPa to 10.0 MPa thereof.

2. The gel particle for washing a separation membrane module defined in claim 1, wherein the organic polymeric compound is a polyurethane water-absorbing gel obtained from a reaction of a long-chain polyol compound and a short-chain polyol compound with an isocyanate compound.

3. A manufacturing method of a gel particle for washing a separation membrane module, which comprises plasticizing a thermoplastic organic polymeric compound, which is gelled by absorbing water, obtained from a reaction of a long-chain polyol compound and a short-chain polyol compound with an isocyanate compound by heating to the melting temperature thereof, hence extruding it into a strand shape followed by cutting it to pellet.

4. A washing method for a separation membrane module which comprises adding the water-absorbing gel defined herein equivalent to 3 to 40 % of the internal capacity of a membrane module into a liquid being treated and suspending it therein, removing and washing built-up materials on the membrane through contacting the gel particle to the membrane and the internal surface of the module, thereby resulting in preventing the membrane from being obstructed and increasing the permeation pressure thereof; wherein the water-absorbing gel comprises an organic polymeric compound with a specific gravity in water from 0.9 to 1.25, a volume swelling ratio in water from 150 % to 4000% and a compressive yield stress in water from 2.0 MPa to 10.0 MPa thereof.

5. The washing method defined in claim 4, wherein a reverse osmosis membrane, an ultra-filtration membrane, an ion-exchange membrane, a dialysis membrane or a permeation vaporization membrane is employed to a membrane module.

*Fig. 1*

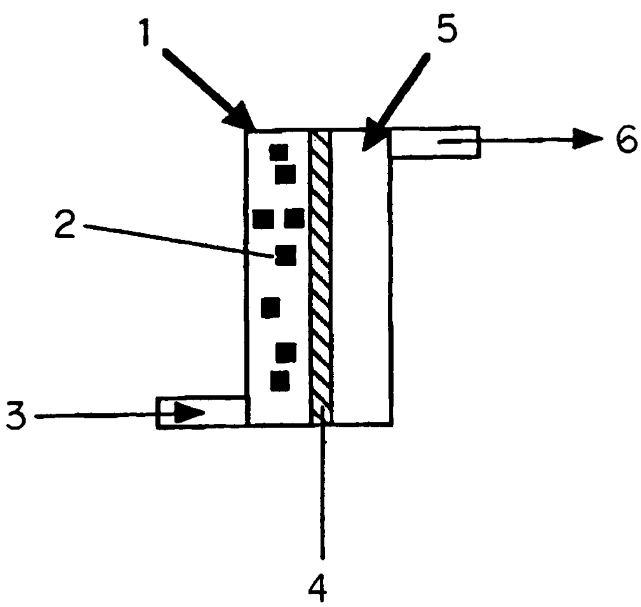

Fig. 2

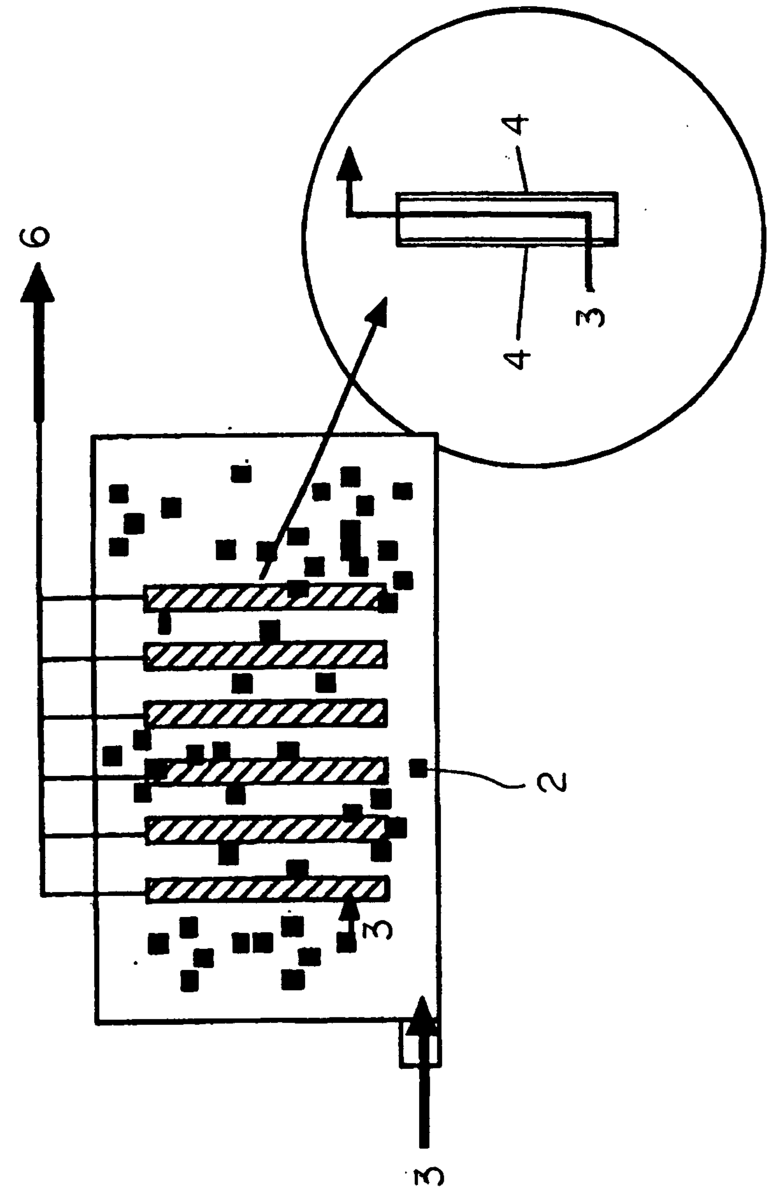

*Fig. 3*

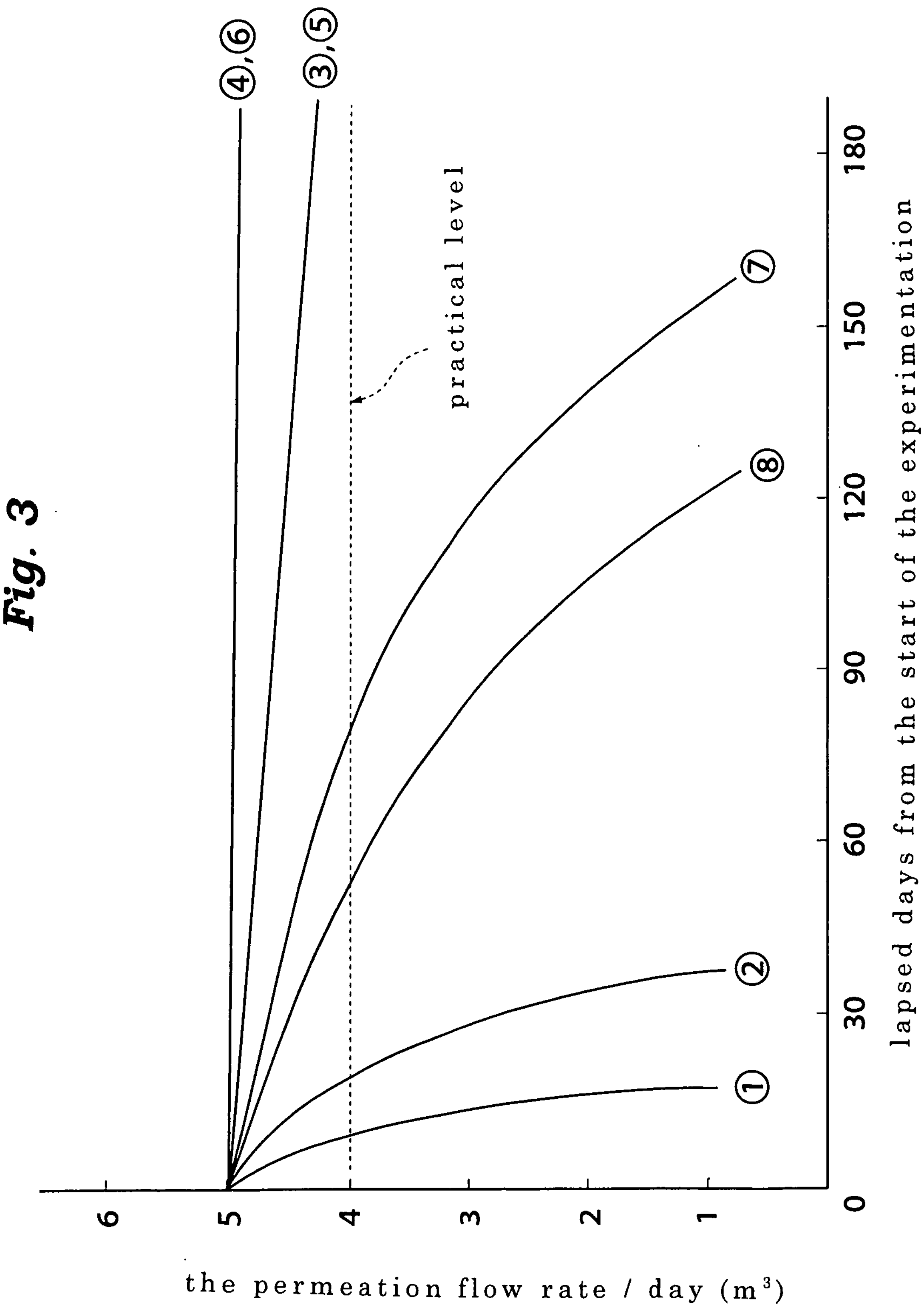

the permeation flow rate / day ($m^3$)
lapsed days from the start of the experimentation
practical level
6
5
4
3
2
1
0
30
60
90
120
150
180
①
②
③,⑤
④,⑥
⑦
⑧

*Fig. 4*

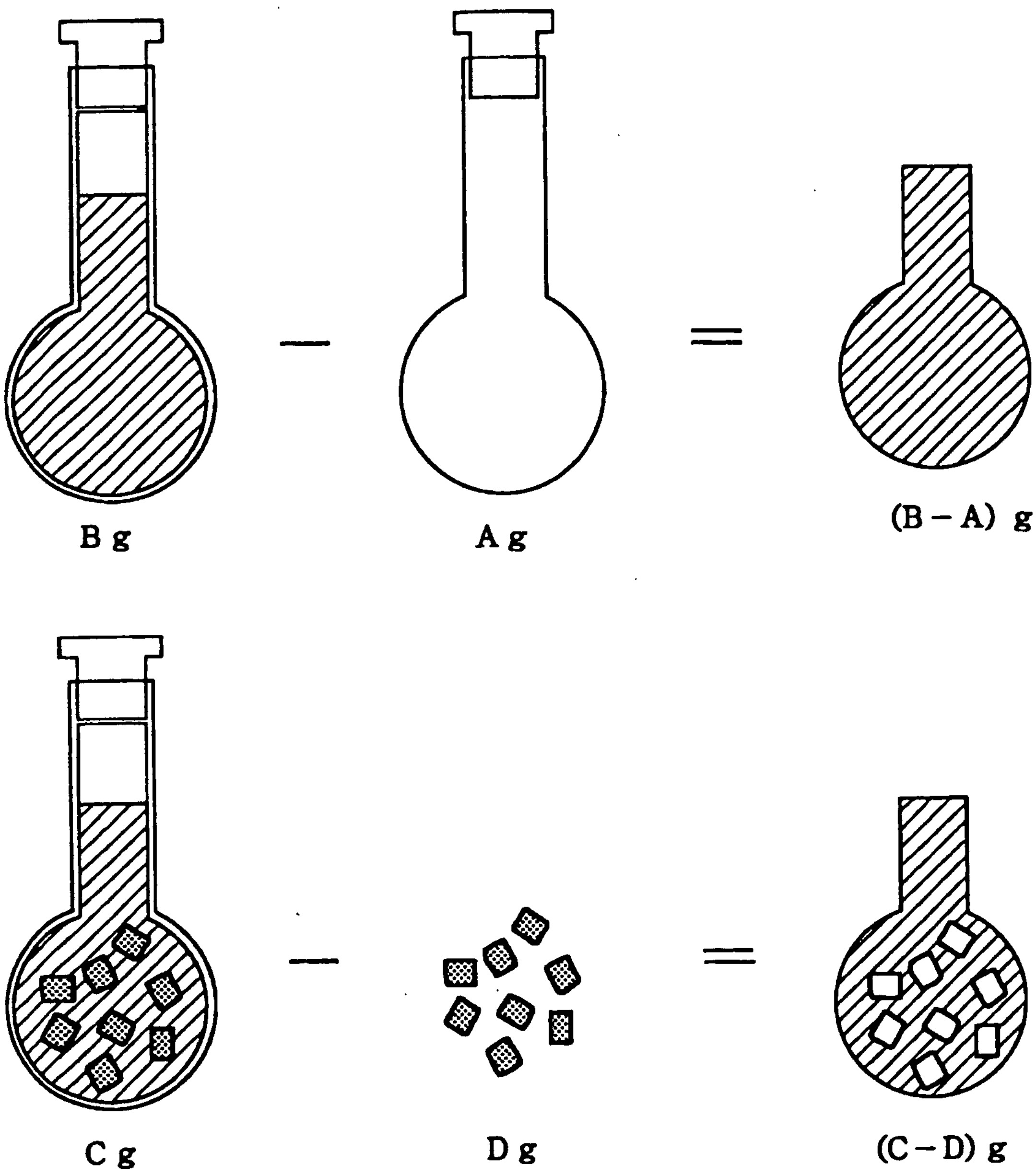

European Patent Office

# EUROPEAN SEARCH REPORT

Application Number
EP 02 01 2789

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.7) |
|---|---|---|---|
| P,X | EP 1 195 396 A (DAI ICHI KOGYO SEIYAKU CO LTD ;KANSAI PAINT CO LTD (JP)) 10 April 2002 (2002-04-10)<br>* example 1 *<br>--- | 1,2 | B01D65/08<br>B01D65/04<br>C09K17/30 |
| X | US 5 932 200 A (KUZMA JIRINA ET AL) 3 August 1999 (1999-08-03)<br>* column 2, line 25 - column 3, line 33 *<br>--- | 3 | |
| A | DATABASE WPI<br>Section Ch, Week 198106<br>Derwent Publications Ltd., London, GB;<br>Class A88, AN 1981-08856D<br>XP002211236<br>& JP 55 155705 A (DAISHO KAGAKU KOGYO), 4 December 1980 (1980-12-04)<br>* abstract *<br>--- | | |
| A | DATABASE WPI<br>Section Ch, Week 198449<br>Derwent Publications Ltd., London, GB;<br>Class A35, AN 1984-304108<br>XP002211237<br>& JP 59 189915 A (NIPPON ELECTRIC CO), 27 October 1984 (1984-10-27)<br>* abstract *<br>----- | | TECHNICAL FIELDS SEARCHED (Int.Cl.7)<br>B01D<br>C09K |

The present search report has been drawn up for all claims

| Place of search | Date of completion of the search | Examiner |
|---|---|---|
| MUNICH | 27 August 2002 | Polesak, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 2789

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2002

| Patent document cited in search report | Publication date | Patent family member(s) | Publication date |
|---|---|---|---|
| EP 1195396 A | 10-04-2002 | EP 1195396 A1<br>WO 0181442 A1 | 10-04-2002<br>01-11-2001 |
| US 5932200 A | 03-08-1999 | US 5728762 A | 17-03-1998 |
| JP 55155705 A | 04-12-1980 | NONE | |
| JP 59189915 A | 27-10-1984 | NONE | |

EPO FORM P0459

For more details about this annex : see Official Journal of the European Patent Office, No. 12/82